# EUROPÄISCHE PATENTANMELDUNG

(11) **EP 1 048 932 A1**
(43) Veröffentlichungstag der Anmeldung: **02.11.2000**
(21) Anmeldenummer: 00108977.0
(22) Anmeldetag: 27.04.2000
(51) Int. Cl.: G01D 5/20

(54) **Magnetischer Positionssensor, seine Verwendung und seine Herstellung**

(30) Priorität: 28.04.1999 DE 19919424
(71) Anmelder: Tyco Electronics Logistics AG, 9323 Steinach / SG (CH)
(72) Erfinder: Hoffelder, Bernd, 67354 Römerberg (DE); Degen, Michael, 67376 Harthausen (DE)
(74) Vertreter: Hirsch, Peter

(57) **Zusammenfassung**

Magnetischer Positionssensor mit einem Sensorelement mit einer Primärwicklung (2), einem Kern (1) und einer Sekundärwicklung (3), wobei der Kern (1) aus einer weichmagnetischen, elastischen Folie gebildet ist.

## Beschreibung

Die Erfindung betrifft einen magnetischen Positionssensor mit einem Sensorelement mit einer Primärwicklung, einem Kern und einer Sekundärwicklung.

Aus EP 0 238 922 A1 und aus DE 44 25 904 sind magnetische Positionssensoren bekannt, bei denen ein im Querschnitt rechteckiger, aus streifenförmigen Blechen gebildeter weichmagnetischer Kern eingesetzt wird. Dadurch haben die bekannten Positionssensoren den Nachteil, daß in der Applikation nur rechteckige Konstruktionen zugelassen sind. Speziell beim Einbau in Bohrungen wird dadurch ein größerer Bauraum bzw. Bohrdurchmesser benötigt.

Ziel der vorliegenden Erfindung ist es daher, einen magnetischen Positionssensor bereitzustellen, der runde Geometrien erlaubt.

Dieses Ziel wird erfindungsgemäß durch einen magnetischen Positionssensor nach Anspruch 1 erreicht. Vorteilhafte Ausgestaltungen der Erfindung, die Verwendung des Positionssensors und seine Herstellung sind den weiteren Ansprüchen zu entnehmen.

Die Erfindung besteht in einem magnetischen Positionssensor mit einem Sensorelement mit einer Primärwicklung, einem Kern und einer Sekundärwicklung, wobei der Kern aus einer weichmagnetischen, elastischen Folie gebildet ist.

Durch die erfindungsgemäße Bildung des Kerns aus einer weichmagnetischen, elastischen Folie wird erreicht, daß der Positionssensor hinsichtlich seiner geometrischen Formgebung sehr flexibel ist.

In einer besonders vorteilhaften Ausführungsform enthält der erfindungsgemäße Positionssensor neben dem Sensorelement ein magnetisches Auslöseelement, wobei die von einem Wechselstrom durchflossene Primärwicklung eine von der Position des Auslöseelementes abhängige elektrische Spannung in der Sekundärwicklung induziert.

Weiterhin ist es besonders vorteilhaft, zwischen der Sekundärwicklung und dem Auslöseelement einen zweiten, aus weichmagnetischer elastischer Folie gebildeten Kern am Sensorelement anzuordnen. Dieser zweite Kern ist ein Rückschlußkern, der den zwischen den Polen des ersten Kern verlaufenden magnetischen Fluß führt und das Sensorelement gegen äußere Einflüsse abschirmt. Dadurch reduziert sich der Weg, den der magnetische Fluß durch Luft geführt wird auf den schmalen, durch den Abstand der beiden Kerne vorgegebenen Luftspalt. Durch die Bildung des Rückschlußkerns aus weichmagnetischer, elastischer Folie ist das gesamte Sensorelement bezüglich seiner Formgebung flexibel.

Insbesondere wird dadurch eine rotationssymmetrische Ausbildung des Sensorelementes ermöglicht, wodurch die Bauform kompakter wird. Bei den bekannten Positionssensoren ist die Anordnung des Auslöseelement nur an einer Seite des rechteckigen Spulenkerns möglich. Dagegen ist aufgrund der Rotationssymmetrie bei der Erfindung eine beliebige Position des Auslöseelementes erlaubt. Bei vielen Applikationen verringert sich dadurch der Abstand des Auslöseelementes vom Sensorelement erheblich, was ein kleineres Volumen für das Auslöseelement mit verringerten Kosten erlaubt.

Bei einer besonders vorteilhaften Ausführungsform des Positionssensors wird das Sensorelement durch Wickeln seiner Bestandteile auf einen zylinderförmigen Körper gebildet. Dadurch kann in besonders einfacher Weise die rotationssymmetrische Form erreicht werden. Durch einfache Variation der Anzahl der gewickelten Lagen ist für den Kern, für die Wicklungen und für den Rückschlußkern ein beliebiges Volumen leicht einstellbar. Auch der Abstand des Rückschlußkerns vom Kern ist flexibel einstellbar. Dies hat den Vorteil, daß die Länge des Luftspalts zwischen Kern und Rückschlußkern auf leichte Weise flexibel einstellbar ist. Eine Verlängerung des Luftspalts erlaubt beispielsweise eine Kompensation des Temperaturgangs der weichmagnetischen Komponenten, während ein kleiner Luftspalt dafür sorgt, daß das Sensorelement mit höheren Ausgangspegeln bzw. höherem Störabstand arbeitet.

Ein solcher zylinderförmiger Positionssensor kann nach Entfernen des Wickelkörpers leicht zu einer beliebigen dreidimensionalen Kurve gebogen werden. Dadurch gelingt es, beliebige Bahnen im Raum abzutasten.

Besonders vorteilhaft ist es, für die Kerne eine mit amorphem magnetischem Material gefüllte Folie zu verwenden. Die bei den bekannten Positionssensoren verwendeten Nickel/ Eisen-Kerne erlauben eine maximale Frequenz für den Wechselstrom der Primärwicklung von 3,3 kHz. Durch Verwendung des amorphen magnetischen Materials kann die Frequenz auf 100 kHz erhöht werden. Dadurch erhöht sich die Ausgangsspannung in der Sekundärwicklung des Sensors, was eine höhere Empfindlichkeit zur Folge hat. Zusätzlich erlaubt die höhere Frequenz auch höhere Abtastraten und damit eine höhere Dynamik des Sensors. Ein weiterer Vorteil des amorphen Materials ist, daß die weitere Umhüllung des Sensors in Spritzgieß- oder Niederdruckumpreßverfahren möglich ist.

Der erfindungsgemäße Positionssensor kann durch seine rotationssymmetrische Form besonders vorteilhafterweise in Bohrungen oder im Inneren von Hydraulikzylindern eingesetzt werden.

Im folgenden wird die Erfindung anhand eines Ausführungsbeispiels und den dazugehörigen Figuren näher erläutert.
Figur 1 zeigt einen erfindungsgemäßen Positionssensor im schematischen Längsschnitt.
Figur 2 zeigt den Positionssensor aus Figur 1 zu einer Kurve gebogen.

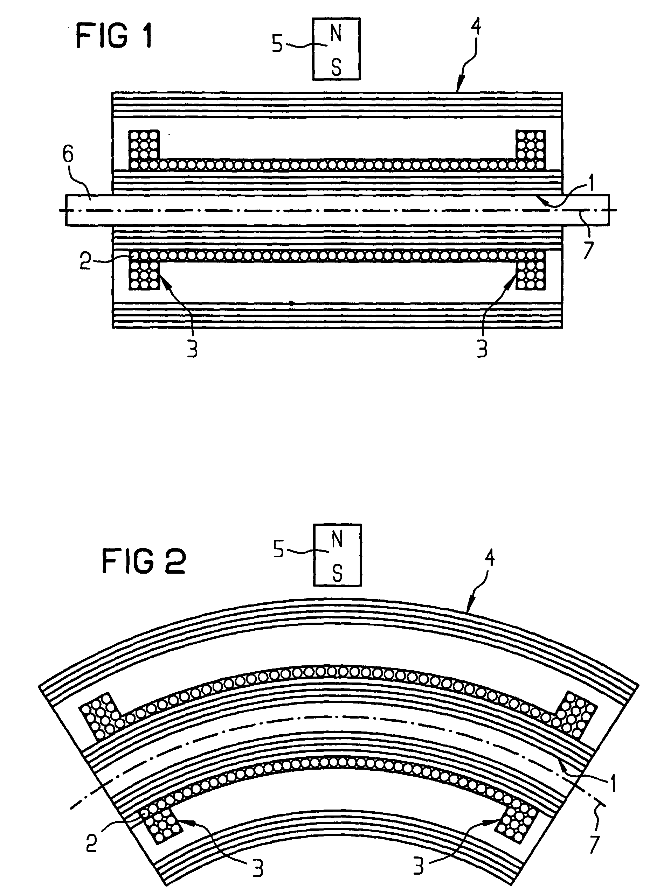

Figur 1 zeigt einen Positionssensor mit einem Sensorelement, wobei symmetrisch um die Symmetrieachse 7 der Kern 1, die Primärwicklung 2, die Sekundärwicklung 3 und in einem Abstand davon der Rückschlußkern 4 auf einen zylinderförmigen Körper 6 als Wickelkern gewickelt sind. In einem Abstand vom Sensorelement befindet sich das beispielsweise längs zur Symmetrieachse bewegliche Auslöseelement 5.

Figur 2 zeigt das Sensorelement, das nach dem Entfernen des Wickelkerns zu einer dreidimensionalen Kurve gebogen wurde.

Die Erfindung beschränkt sich nicht auf die gezeigte Ausführungsform sondern wird in ihrer allgemeinsten Form durch Anspruch 1 definiert.

## Patentansprüche

1. Magnetischer Positionssensor
mit einem Sensorelement mit
- einer Primärwicklung (2),
- einem Kern (1)
- und einer Sekundärwicklung (3),
wobei der Kern aus einer weichmagnetischen, elastischen Folie gebildet ist.

2. Positionssensor nach Anspruch 1,
mit einem magnetischen Auslöseelement (5), wobei die Primärwicklung (2) in der Sekundärwicklung (3) eine von der Position des Auslöseelementes (5) abhängige elektrische Spannung induziert.

3. Positionssensor nach Anspruch 2,
bei dem das Sensorelement einen zwischen der Sekundärwicklung (3) und dem Auslöseelement (5) angeordneten, aus weichmagnetischer elastischer Folie gebildeten, zweiten Kern (4) aufweist.

4. Positionssensor nach einem der Ansprüche 1 bis 3,
wobei das Sensorelement rotationssymmetrisch ausgebildet ist.

5. Positionssensor nach Anspruch 4,
wobei das Sensorelement durch Wickeln seiner Bestandteile auf einen zylinderförmigen Körper (6) gebildet ist.

6. Positionssensor nach einem der Ansprüche 1 bis 5,
wobei das Sensorelement zu einer dreidimensionalen Kurve gebogen ist.

7. Positionssensor nach einem der Ansprüche 1 bis 6,
wobei die Folie mit amorphem weichmagnetischem Material gefüllt ist.

8. Verwendung eines Positionssensors nach einem der Ansprüche 4 bis 7 in Bohrungen oder im Innern von Hydraulikzylindern.

9. Herstellung eines Positionssensors nach Anspruch 5,
wobei das Sensorelement durch Wickeln seiner Bestandteile auf einen zylinderförmigen Körper (6) gebildet wird.

10. Herstellung eines Positionssensors nach Anspruch 6,
wobei das Sensorelement nach dem Entfernen des zylinderförmigen Körpers (6) zu einer dreidimensionalen Kurve gebogen wird.
